(19) Europäisches Patentamt
European Patent Office
Office européen des brevets

(11) **EP 3 683 111 A1**

(12) **EUROPÄISCHE PATENTANMELDUNG**

(43) Veröffentlichungstag:
**22.07.2020  Patentblatt 2020/30**

(51) Int Cl.:
***B60T 13/66*** *(2006.01)*

(21) Anmeldenummer: **20150546.8**

(22) Anmeldetag: **07.01.2020**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **15.01.2019  DE 102019100935**

(71) Anmelder: **Liebherr-Hydraulikbagger GmbH**
**88457 Kirchdorf (DE)**

(72) Erfinder:
• **Meitinger, Bernhard**
  **87740 Buxheim (DE)**
• **Schropp, Markus**
  **87634 Obergünzburg (DE)**
• **Mückl, Markus**
  **87466 Oy-Mittelberg (DE)**
• **Purr, Alexander**
  **89264 Weissenhorn (DE)**

(74) Vertreter: **Laufhütte, Dieter**
**Lorenz Seidler Gossel**
**Rechtsanwälte Patentanwälte**
**Partnerschaft mbB**
**Widenmayerstraße 23**
**80538 München (DE)**

(54) **BREMSVORRICHTUNG FÜR EINE ARBEITSMASCHINE**

(57)     Die Erfindung betrifft eine Bremsvorrichtung für eine Arbeitsmaschine, umfassend eine Druckversorgung, einen Bremskreis, mindestens eine über den Bremskreis betätigbare Bremse, ein manuell steuerbares Bremsventil, mittels welchem der Bremskreis betätigbar ist, eine Steuereinheit und mindestens ein durch die Steuereinheit steuerbares Steuerventil, mittels welchem der Bremskreis betätigbar ist. Erfindungsgemäß ist in Abhängigkeit von wenigstens zwei durch die Steuereinheit erfassbaren Eingangssignalen das durch die mindestens eine Bremse ausgeübte Gesamtbremsmoment mittels einer entsprechenden Steuerung bzw. Regelung des mindestens einen Steuerventils einstellbar, wobei ein erstes Eingangssignal einen aktuellen Zustand der manuellen Betätigung des Bremsventils betrifft und ein zweites Eingangssignal einen aktuellen Fahrzustand der Arbeitsmaschine betrifft.

Fig. 5

**Beschreibung**

Die vorliegende Erfindung betrifft eine Bremsvorrichtung für eine Arbeitsmaschine nach dem Oberbegriff des Anspruchs 1.

Bremsvorrichtungen sind bei Fahrzeugen und mobilen Arbeitsmaschinen bekannt. Es handelt sich dabei häufig um Steuerungs- bzw. Regelungssysteme, welche vom Bedienpersonal der Arbeitsmaschine manuell gesteuert werden können. Hierfür sind typischerweise entsprechende Bremspedale oder andere Betätigungsvorrichtungen in der Fahrerkabine vorgesehen, mittels welchen manuell ein Bremsvorgang eingeleitet und kontrolliert werden kann.

Viele Arbeitsmaschinen sind mit Bremsvorrichtungen (z.B. Zwei-Kreis-Bremsanlagen) ausgestattet, bei denen der Bremskreis, der die Betriebsbremsen betätigt, über ein Bremsventil manuell steuerbar ist - typischerweise über ein mit dem Bremsventil gekoppeltes Bremspedal. Die Bremsdruck-zu-Bremspedalwinkel-Kennlinie des manuell betätigbaren Bremsventils ist in der Regel vorgegeben und nicht anpassbar.

Nachteilig an dieser Lösung ist, dass sich bei einer vorgegebenen Abhängigkeit des Bremsmoments der Arbeitsmaschine von der Bremspedalstellung in unterschiedlichen Fahrsituationen teils erhebliche Abweichungen der Bremsverzögerung ergeben. Beispielsweise reagiert eine voll beladene Arbeitsmaschine bei gleichem Bremsmoment bzw. gleicher Bremspedalstellung anders als in einem weniger beladenen oder unbeladenen Zustand. Ebenfalls ist die Bremsverzögerung bei gleicher Bremspedalstellung abhängig von der Steigung des Geländes bzw. Fahruntergrunds sowie der Fahrgeschwindigkeit der Arbeitsmaschine.

Das unterschiedliche Bremsverhalten in den jeweiligen Fahrsituationen erfordert daher eine erhöhte Aufmerksamkeit und Erfahrung des Fahrers der Arbeitsmaschine und birgt zwangsläufig ein erhöhtes Sicherheitsrisiko.

Vor diesem Hintergrund liegt der vorliegenden Erfindung die Aufgabe zugrunde, das Bremsverhalten von Arbeitsmaschinen zu verbessern.

Erfindungsgemäß wird diese Aufgabe durch eine Bremsvorrichtung für Arbeitsmaschinen mit den Merkmalen des Anspruchs 1 gelöst. Demnach umfasst die Bremsvorrichtung eine Druckversorgung, einen Bremskreis, mindestens eine über den Bremskreis betätigbare Bremse, ein manuell steuerbares Bremsventil, mittels welchem der Bremskreis betätigbar ist, eine Steuereinheit und mindestens ein durch die Steuereinheit steuerbares Steuerventil, mittels welchem der Bremskreis betätigbar ist.

Erfindungsgemäß lässt sich in Abhängigkeit von wenigstens zwei durch die Steuereinheit erfassbaren Eingangssignalen das durch die mindestens eine Bremse auf die Arbeitsmaschine ausgeübte Gesamtbremsmoment mittels einer entsprechenden Steuerung bzw. Regelung des mindestens einen Steuerventils einstellen. Dabei betrifft ein erstes Eingangssignal einen aktuellen Zustand der manuellen Betätigung des Bremsventils und ein zweites Eingangssignal einen aktuellen Fahrzustand bzw. eine Fahrsituation der Arbeitsmaschine.

Durch die erfindungsgemäße Bremsvorrichtung findet also eine an die aktuelle Fahrsituation angepasste Einstellung des Gesamtbremsmoments statt, indem eine entsprechende elektronische Ansteuerung bzw. Regelung des mindestens einen Steuerventils durch die Steuereinheit vorgenommen wird. Dadurch ist es möglich, die Auswirkungen auf das Bremsverhalten der Arbeitsmaschine, die sich durch bestimmte Fahrsituationen wie Steigung / Gefälle, Beladung, Fahrgeschwindigkeit, Untergrundbeschaffenheit, Lenkwinkel bzw. Knickwinkel, etc. ergeben, auszugleichen und dadurch das Bremsverhalten für den Bediener bzw. Fahrer zu verbessern.

In die Steuereinheit gehen nicht nur Signale betreffend die aktuelle Fahrsituation ein, sondern auch Informationen über den aktuellen Zustand der manuellen Betätigung des Bremsventils (z.B. den Bremspedalwinkel). Dadurch wird das Bremsverhalten der Arbeitsmaschine abhängig von der gewünschten Bremskraft, d.h. abhängig davon, wie stark der Fahrer die Arbeitsmaschine zu einem gegebenen Zeitpunkt abbremsen möchte, an die aktuelle Fahrsituation angepasst.

Vorteilhafte Ausführungsformen der Erfindung ergeben sich aus den Unteransprüchen und der nachfolgenden Beschreibung.

In einer Ausführungsform ist vorgesehen, dass ein Betätigungsmittel, vorzugsweise ein Bremspedal, vorgesehen ist, welches mit dem Bremsventil verbunden ist, wobei mittels einer manuellen Betätigung des Betätigungsmittels das Bremsventil steuerbar bzw. regelbar ist, und wobei das erste Eingangssignal eine aktuelle Stellung des Betätigungsmittels, insbesondere den aktuellen Winkel des Bremspedals, betrifft. Die aktuelle Stellung des Betätigungsmittels kann beispielsweise mittels eines Sensors erfasst werden. Bei einem Bremspedal ist beispielsweise der Pedalwinkel repräsentativ für die gewünschte Bremskraft, sodass ein Sensor zur Erfassung des Bremspedalwinkels vorgesehen sein kann. Somit kann im Bremskreis ein Bremsdruck in Abhängigkeit von der Winkelstellung des Bremspedals erzeugt werden, wobei Informationen hinsichtlich des Bremspedalwinkels ebenfalls an die Steuereinheit übermittelt werden. Die Ansteuerung des Bremsventils kann dann entweder direkt oder über ebenfalls die Steuereinheit erfolgen.

In einer weiteren Ausführungsform ist vorgesehen, dass der aktuelle Fahrzustand der Arbeitsmaschine das Gewicht bzw. die Beladung, die Geschwindigkeit, den Lenkwinkel, den Knickwinkel und/oder einen Schaltzustand von Sperrdifferenzialen der Arbeitsmaschine und/oder die Untergrundbeschaffenheit und/oder die Steigung (d.h. den Winkel einer Geländesteigung oder eines Gefälles) des Untergrunds betrifft. Es kann ebenfalls vorgesehen sein, zu erfassen, ob der Untergrund nass oder trocken ist.

Dieser aktuelle Fahrzustand ist vorzugsweise mittels eines oder mehrerer Sensoren erfassbar. Je nach zu erfassendem Parameter kann es sich dabei um einen Drucksensor bzw. eine Wiegeeinrichtung, einen Geschwindigkeitssensor, einen Knickwinkelsensor, einen Lenkwinkelsensor und/oder einen Sensor zur Erfassung der Untergrundbeschaffenheit (z.B. eine Kamera oder einen anderen optischen Sensor) handeln.

Der aktuelle Fahrzustand bzw. Fahrsituation wird also idealerweise direkt und automatisch erfasst und an die Steuereinheit übermittelt, sodass eine Anpassung des Gesamtbremsmoments in Echtzeit erfolgen kann. Dadurch wird der Fahrer der Arbeitsmaschine entlastet, da er nicht von sich aus auf die aktuellen Fahrgegebenheiten Rücksicht nehmen muss oder nur in beschränktem Umfang. Dadurch wird das Sicherheitsrisiko, welches sich aus der menschlichen Komponente der Steuerung der Arbeitsmaschine zwangsläufig ergibt, reduziert.

In einer weiteren Ausführungsform ist vorgesehen, dass durch die Einstellung des Gesamtbremsmoments die Bremsverzögerung der Arbeitsmaschine auf einen von dem aktuellen Fahrzustand unabhängigen Wert festlegbar ist, welcher vorzugsweise von dem ersten Eingangssignal abhängt. Durch ein an die aktuelle Fahrsituation angepasstes Bremsmoment wird also erreicht, dass die Bremsverzögerung der Arbeitsmaschine nicht mehr oder nur noch in geringerem Umfang von der aktuellen Fahrsituation abhängt (dies hängt davon ab, wie viele der den Fahrzustand charakterisierenden Faktoren erfasst und in die Anpassung des Gesamtbremsmoments einbezogen werden). Beispielsweise verlängert sich bekanntermaßen der Bremsweg einer Arbeitsmaschine in beladenem Zustand, bei erhöhter Geschwindigkeit oder bei Befahrung eines Gefälles. In solchen Situationen kann die Steuereinheit beispielsweise automatisch durch eine Erhöhung des Gesamtbremsmoments eine Reduzierung der Bremsverzögerung bzw. des Bremswegs herbeiführen, sodass sich für den Fahrer ein gleichbleibendes Bremsverhalten ergibt. Umgekehrt kann eine Erniedrigung des Gesamtbremsmoments, insbesondere bei einer bestimmten Bremspedalstellung, durch die Steuereinheit bei Vorliegen einer Steigung oder bei unbeladenem Zustand zu einer Erhöhung der Bremsverzögerung führen.

Die durch eine entsprechende Anpassung des Gesamtbremsmoments auf einen bestimmten Wert festgelegte Bremsverzögerung ist idealerweise abhängig von der Stellung des Betätigungselements, also beispielsweise vom Bremspedalwinkel.

In einer weiteren Ausführungsform ist vorgesehen, dass zur Einstellung der Bremsverzögerung die Kennlinie des Gesamtbremsmoments zur Stellung des Betätigungsmittels durch die Steuereinheit veränderbar ist. Dies kann beispielsweise durch die Überlagerung einer Kennlinie (insbesondere der Bremsdruck-zu-Bremspedalwinkel-Kennlinie) des Bremsventils mit einer durch die Steuereinheit einstellbaren Kennlinie des mindestens einen Steuerventils erfolgen. Es kann beispielsweise eine Änderung des Verlaufs der Kennlinie, eine Erhöhung oder eine Erniedrigung der Kennlinie erfolgen, je nach Anordnung und Ansteuerung des mindestens einen Steuerventils.

In einer weiteren Ausführungsform ist vorgesehen, dass die Bremsvorrichtung mindestens zwei Bremskreise mit jeweils mindestens einer Bremse umfasst, wobei jeder Bremskreis mindestens ein von der Steuereinheit steuerbares Steuerventil umfasst und wobei die Steuerventile der unterschiedlichen Bremskreise vorzugsweise unabhängig voneinander steuerbar bzw. regelbar sind. Es können beispielsweise unterschiedliche Bremskreise für verschiedene Achsen und/oder Differentiale der Arbeitsmaschine vorgesehen sein, sodass diese unabhängig voneinander abgebremst werden können. Dafür ist für jeden dieser Bremskreise jeweils mindestens ein eigenes Steuerventil vorgesehen, welches von der Steuereinheit gesteuert bzw. geregelt wird. Die Art und Weise, wie die unterschiedlichen Bremskreise betätigt werden, hängt dann von dem aktuellen Fahrzustand ab, welcher mittels des mindestens einen zweiten Eingangssignals an die Steuereinheit übermittelt wird. Der aktuelle Fahrzustand kann auch einen Schaltzustand mehrerer Sperrdifferentiale betreffen.

In einer weiteren Ausführungsform ist vorgesehen, dass die Bremsvorrichtung einen von der Steuereinheit steuerbaren bzw. regelbaren Retarder und/oder eine von der Steuereinheit steuerbare bzw. regelbare Motorbremse umfasst, welche zum Gesamtbremsmoment beiträgt und vorzugsweise in Abhängigkeit vom aktuellen Zustand der manuellen Betätigung des Bremsventils und/oder dem aktuellen Fahrzustand durch die Steuereinheit steuerbar bzw. regelbar ist.

In einer weiteren Ausführungsform ist vorgesehen, dass das Bremsventil und mindestens ein Steuerventil parallel geschaltet und über mindestens ein Wechselventil mit dem Bremskreis verbunden sind. Das Bremsventil und das mindestens eine Steuerventil können über eine gemeinsame oder unterschiedliche Druckversorgungen mit Fluid versorgt werden. Zusätzlich kann ein Druckspeicher dem Steuerventil vorgeschaltet sein, um den anliegenden Druck im Vergleich zum am Bremsventil anliegenden Druck anpassen zu können, insbesondere bei Verwendung einer gemeinsamen Druckquelle bzw. Druckversorgung.

In einer weiteren Ausführungsform ist vorgesehen, dass mindestens ein Sicherheitsventil dem Bremsventil seriell nachgeschaltet ist. Vorzugsweise kann über dieses Sicherheitsventil eine Druckentlastung zu einem Tank erfolgen.

Es kann auch eine Kombination von parallel und seriell geschalteten Steuerventilen vorliegen. Das Bremsventil und/oder das mindestens eine Steuerventil können als Proportionalventile ausgeführt sein.

Weiterhin betrifft die vorliegende Erfindung eine Arbeitsmaschine, insbesondere Bagger, Dumper, Radlader oder Tieflader, mit einer erfindungsgemäßen Bremsvorrichtung. Dabei ergeben sich offensichtlich dieselben Vorteile und Eigenschaften wie für die erfindungsgemäße Bremsvorrichtung, weshalb an dieser Stelle auf eine wiederholende Beschreibung verzichtet wird.

Weitere Merkmale, Einzelheiten und Vorteile der Erfindung ergeben sich aus den nachfolgend anhand der Figuren erläuterten Ausführungsbeispielen. Es zeigen:

Figur 1: eine schematische Darstellung eines ersten Ausführungsbeispiels der erfindungsgemäßen Bremsvorrichtung;

Figur 2: eine schematische Darstellung eines zweiten Ausführungsbeispiels der erfindungsgemäßen Bremsvorrichtung;

Figur 3: eine schematische Darstellung eines dritten Ausführungsbeispiels der erfindungsgemäßen Bremsvorrichtung;

Figur 4: ein Diagramm mit möglichen Kennlinien des Bremsventils und des mindestens einen Steuerventils; und

Figur 5: eine Darstellung eines vierten Ausführungsbeispiels der erfindungsgemäßen Bremsvorrichtung.

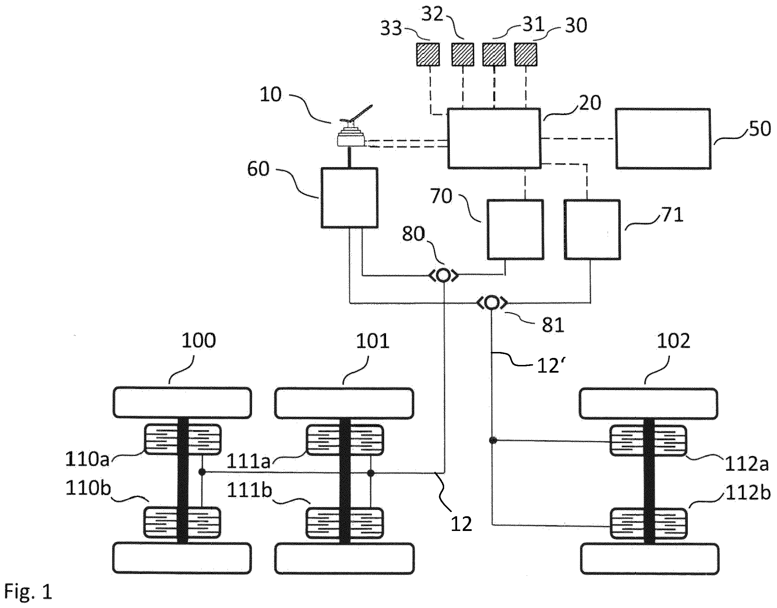

In der Figur 1 ist ein erstes Ausführungsbeispiel der erfindungsgemäßen Bremsvorrichtung für eine Arbeitsmaschine schematisch dargestellt. Bei der Arbeitsmaschine kann es sich um einen Bagger, Dumper bzw. Muldenkipper, Radlader, Tieflader oder sonstige Baumaschine handeln. Die Bremsvorrichtung umfasst mehrere Bremsen 110a-b, 111a-b, 112a-b, welche an unterschiedlichen Achsen 100, 101, 102 der Arbeitsmaschine angeordnet sind und zum Abbremsen der jeweiligen Achsen 100, 101, 102 bzw. Differentiale der jeweiligen Achsen 100, 101, 102 eingesetzt werden. Die Bremsen 110a-b, 111a-b, 112a-b werden über zwei hydraulische Bremskreise 12, 12' betätigt, wobei Bremskreis 12 den Bremsen 110a-b und 111ab und Bremskreis 12' den Bremsen 112a-b zugeordnet ist. Bei den Achsen 100 und 101 kann es sich vorliegend um die Hinterachsen und bei der Achse 102 um die Vorderachse eines knickgelenkten Dumpers handeln.

Die Bremsvorrichtung umfasst ein vom Fahrer der Arbeitsmaschine manuell betätigbares Bremspedal 10 mit integriertem Winkelsensor (nicht gezeigt) zum Erfassen der Bremspedalstellung. Das Bremspedal 10 ist mit einem Bremsventil 60 verbunden, welches hier als Zwei-Kreis-Bremsventil ausgeführt ist und beide Bremskreise 12, 12' versorgt bzw. den Bremsdruck in den Bremskreisen 12, 12' regelt. Eine durch manuelle Betätigung des Bremspedals 10 ausgelöste Betätigung des Bremsventils 60 führt zu einer Erhöhung des Bremsdrucks in beiden Bremskreisen 12, 12' und somit zu einer Betätigung der Bremsen 110a-b, 111a-b, 112a-b. Durch die Kopplung von Bremspedal 10 und Bremsventil 60 wird somit ein Bremsdruck in Abhängigkeit von der Winkelstellung des Bremspedals 10 erzeugt. Die Bremskreise 12, 12' sind insbesondere über das Bremsventil 60 mit Druckversorgung (nicht gezeigt) verbunden. Das Bremsventil 60 wird direkt über das Bremspedal 10 betätigt. Es kann aber auch vorgesehen sein, dass eine Betätigung über die Steuereinheit 20 oder eine weitere elektronische Einheit erfolgt.

Des Weiteren umfasst jeder der Bremskreise 12, 12' ein elektrisch steuerbares Steuerventil 70, 71, welches über je ein Wechselventil 80, 81 mit dem Bremsventil 60 verbunden ist. Die Wechselventile 80, 81 verbinden die Bremsen 110a-b, 111ab, 112a-b mit dem Bremsventil 60 oder den Steuerventilen 70, 71, je nachdem, ob der von den Steuerventilen 70, 71 oder der vom Bremsventil 60 erzeugte Druck größer ist. Die Bremskreise 12, 12' sind also sowohl über das Bremsventil 60 als auch über die Steuerventile 70, 71 betätigbar.

Die Arbeitsmaschine umfasst ferner eine Steuereinheit 20, welche Signale des Winkelsensors des Bremspedals 10 empfängt (erstes Eingangssignal). Darüber hinaus empfängt die Steuereinheit 20 in diesem Ausführungsbeispiel Signale von einem Geschwindigkeitssensor 30 zur Erfassung der Fahrgeschwindigkeit der Arbeitsmaschine, einer Wiegeeinrichtung 31 zur Erfassung der Beladung bzw. des Beladezustands der Arbeitsmaschine, einem Lenkwinkelsensor oder Knickwinkelsensor 32 zur Erfassung des Lenkwinkels oder Knickwinkels der Arbeitsmaschine und einem Sensor 33 zur Erkennung der Untergrundbeschaffenheit (beispielsweise eine Kamera). Die Sensoren 30-33 liefern über entsprechende Signale Informationen über den aktuellen Fahrzustand an die Steuereinheit 20.

Die Steuereinheit 20 ist elektrisch mit den Steuerventilen 70, 71 verbunden und kann diese unabhängig voneinander elektrisch steuern bzw. regeln. Darüber hinaus umfasst die Bremsvorrichtung einen Retarder 50, welcher ebenfalls von der Steuereinheit 20 gesteuert bzw. geregelt wird. Die Steuereinheiten 70, 71 sind parallel zu dem Bremsventil 60 geschaltet und können mit der gleichen Druckquelle oder mit einer oder mehreren separaten Druckquellen verbunden sein.

Die Steuereinheit 20 errechnet aufgrund der Signale der Sensoren 30-33 einen Sollstromwert und steuert die Steuerventile 70, 71 mit diesem Sollstromwert an. Dadurch wird ein entsprechender Druck durch die Steuerventile 70, 71 in den Bremskreisen 12, 12' bzw. den Bremsen 110a-b, 111a-b, 112a-b aufgebaut, der einem bestimmten Gesamtbremsmoment entspricht, das von den Sensorsignalen 30-33 und der aktuellen Winkelstellung des Bremspedals 10 abhängt.

Durch die Verwendung der zusätzlichen Steuerventile 70, 71 zur Steuerung des Bremsdrucks in den Bremskreisen 12, 12' kann das Gesamtbremsmoment, welches durch die Bremsen 110a-b, 111a-b, 112a-b auf die Arbeitsmaschine ausgeübt wird, an die aktuelle Fahrsituation angepasst werden. Dadurch kann eine von der Fahrsituation unabhängige Bremsverzögerung erreicht werden.

Die Bremsverzögerung ergibt sich neben anderen Faktoren aus der Bremspedalstellung, der Fahrgeschwindigkeit, der Beladung der Arbeitsmaschine, dem Lenkwinkel bzw. Knickwinkel, dem Schaltzustand der Sperrdifferentiale (z.B. Längs- und Quersperre), der Bremskennlinien der unterschiedlichen Achsen 100, 101, 102 (welche identisch oder unterschiedlich sein können), dem Steigungswinkel des Geländes bzw. Fahruntergrunds (Steigung oder Gefälle) und der Untergrundbeschaffenheit.

Das durch die Bremsen 110a-b, 111a-b, 112a-b erzeugte Gesamtbremsmoment $M_{Gesamt}$ kann an die vorgenannten Situationen und Faktoren angepasst werden und ergibt sich aus folgendem Zusammenhang:

$$M_{Gesamt} = M_{Soll} - M_{Dauer}$$

Hierbei bezeichnet $M_{Soll}$ das durch Bremsventil 60 und Steuerventile 70, 71 erzeugte Sollbremsmoment und $M_{Dauer}$ das Bremsmoment, welches durch etwaige zusätzliche Dauerbremsvorrichtungen erzeugt wird. Vorliegend handelt es sich dabei um den Retarder 50 ($M_{Dauer}$ = $M_{Retarder}$), aber es können alternativ oder zusätzlich weitere Dauerbremsvorrichtungen wie eine Motorbremse vorhanden sein. Bei Kombination eines Retarders 50 und einer Motorbremse berechnet sich $M_{Dauer}$ zu:

$$M_{Dauer} = M_{Retarder} + M_{Motor}$$

$M_{Retarder}$ bezeichnet hierbei das durch den Retarder 50 erzeugte Bremsmoment und $M_{Motor}$ das durch die Motorbremse erzeugte Bremsmoment. Das Sollbremsmoment hängt insbesondere von dem in der Steuereinheit 20 erzeugten Sollstromwert ab.

Das Gesamtbremsmoment wird an die oben genannten Faktoren angepasst, sodass die Bremsverzögerung bei einer bestimmten Bremspedalstellung immer unabhängig von der jeweiligen Fahrsituation ist.

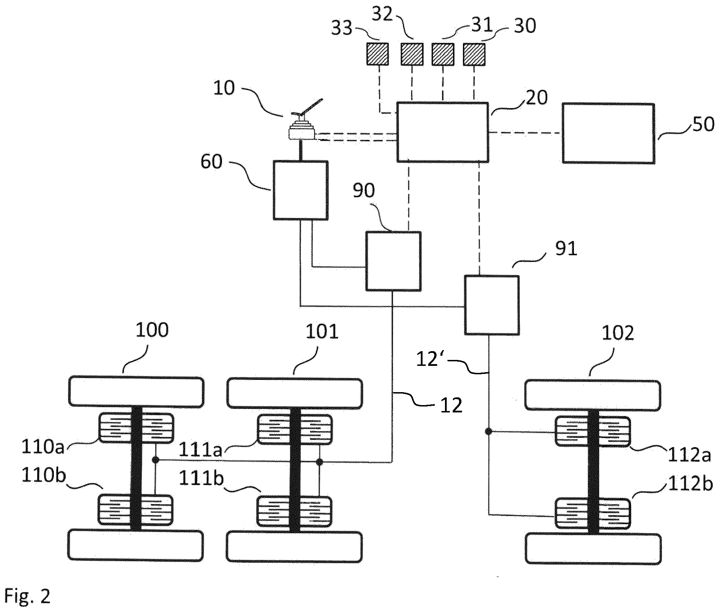

In der Figur 2 ist ein zweites Ausführungsbeispiel der erfindungsgemäßen Bremsvorrichtung schematisch dargestellt. Im Unterschied zum ersten Ausführungsbeispiel der Figur 1 sind hier die Steuerventile 90, 91 nicht parallel zu dem Bremsventil 60 angeordnet und mit diesem und den Bremsen über Wechselventile 80, 81 verbunden, sondern seriell dem Bremsventil 60 in den jeweiligen Bremskreisen 12, 12' nachgeschaltet. Dadurch ist es möglich, den Bremsdruck, den das manuell betätigte Bremsventil 60 erzeugt, zu reduzieren. Es kann aber kein höherer Druck als der vom Bremsventil 60 erzeugte Druck in die Bremskreise 12, 12' eingeprägt werden.

den.

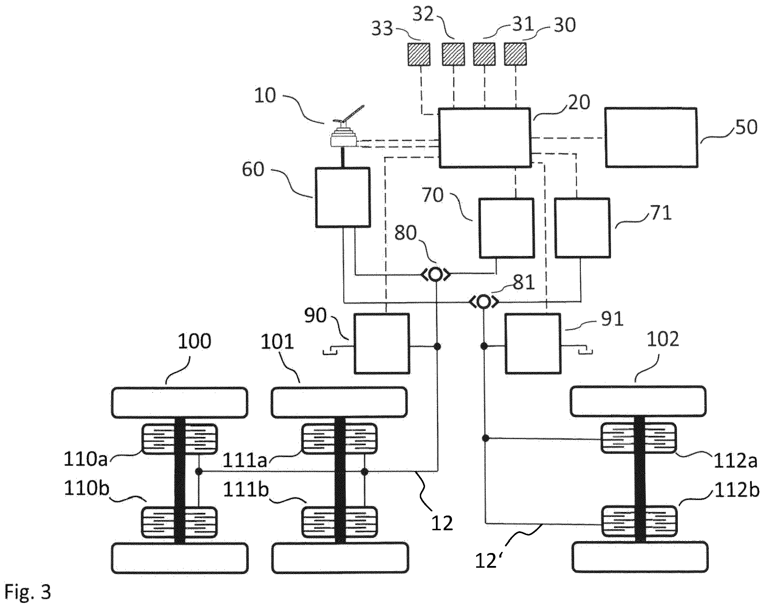

In der Figur 3 ist ein drittes Ausführungsbeispiel der erfindungsgemäßen Bremsvorrichtung schematisch dargestellt. Bei dieser Variante sind die Vorteile der in den Figuren 1 und 2 gezeigten Ausführungsformen kombiniert. Zusätzlich zu den bereits aus dem ersten Ausführungsbeispiel bekannten parallel zum Bremsventil 60 angeordneten Steuerventilen 70, 71 ist in den Bremskreisen 12, 12' jeweils ein weiteres von der Steuereinheit 20 steuerbares bzw. regelbares Steuerventil 90, 91 angeordnet, welches den jeweiligen Bremskreis 12, 12' mit einem Tank verbindet bzw. zu diesem bei entsprechender Betätigung entlastet. Die Steuerventile 90, 91 sind in Serie zu den Wechselventilen 80, 81 angeordnet und somit dem Bremsventil 60 und den Steuerventilen 70, 71 nachgeschaltet.

Dadurch kann der durch manuelle Betätigung des Bremspedals 10 mittels des Bremsventils 60 erzeugte Bremsdruck sowohl durch entsprechende Ansteuerung der parallelen Steuerventile 70, 71 erhöht, als auch durch entsprechende Ansteuerung der nachgeschalteten Steuerventile 90, 91 erniedrigt werden.

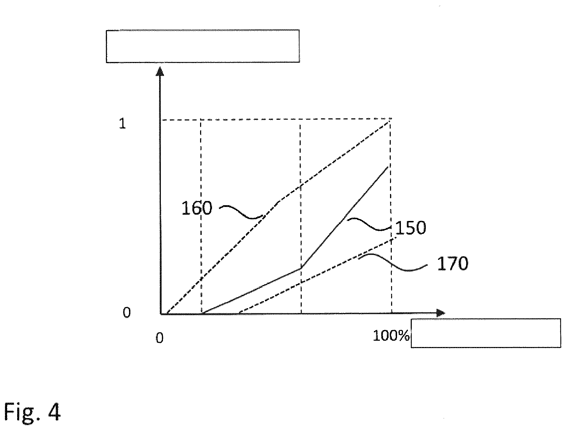

In der Figur 4 sind drei unterschiedliche Bremsmoment-zu-Bremspedalwinkel-Kennlinien 150, 160, 170 in einem gemeinsamen Diagramm dargestellt. Die Kennlinie 150 entspricht der Kennlinie des Bremsventils 60, während die Kennlinien 160 und 170 mögliche Kennlinien der parallelen (Figur 1 und 3, Steuerventile 70, 71) und der nachgeschalteten (Figur 2 und 3, Steuerventile 90, 91) Steuerventile zeigen. Zusätzlich kann es möglich sein, die Kennlinien durch entsprechende Steuerung bzw. Regelung des Retarders 50 und/oder einer eventuell ebenfalls vorgesehenen Motorbremse anzupassen.

Durch eine entsprechende Überlagerung der Kennlinien der Steuerventile 70, 71, 90, 91 mit der Kennlinie 150 des Bremsventils 60 lässt sich eine von der Fahrsituation unabhängige Bremsverzögerung für einen gegebenen Bremspedalwinkel erreichen.

Beispielsweise kann in einem Zustand, in dem die Arbeitsmaschine beladen ist, die Kennlinie 150 des Bremsventils 60 mittels der Steuerventile 70, 71 durch die Kennlinie 160 überlagert werden, sodass die Bremsverzögerung derjenigen im unbeladenen Zustand entspricht. In einem unbeladenen Zustand oder bei Vorliegen einer Steigung (Bergauffahrt) kann die Kennlinie 150 hingegen durch die Steuerventile 90, 91 auf die Kennlinie 170 reduziert werden.

In bestimmten Fällen kann es auch nötig sein, in Abhängigkeit von den oben genannten Sensorsignalen 30-33 für die unterschiedlichen Achsen 100, 101, 102 unterschiedliche Bremsdrücke einzuspeisen. Beispielsweise kann in Abhängigkeit vom Lenkwinkel der Bremsdruck an der oder den Hinterachsen reduziert werden.

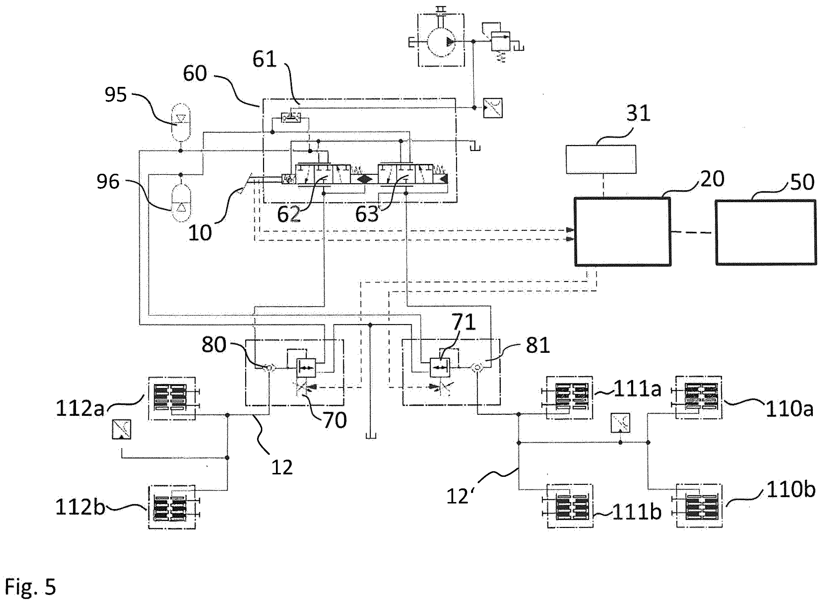

Die Figur 5 zeigt ein viertes Ausführungsbeispiel der erfindungsgemäßen Bremsvorrichtung in einer detaillierteren schematischen Darstellung, welches im Wesentlichen der in Figur 1 dargestellten Lösungsvariante mit zwei parallel zu dem Bremsventil 60 angeordneten Steuerventilen 70, 71 entspricht, welche hier als proportionale Druckreduzierventile ausgebildet sind. Das Bremsventil 60 umfasst zwei gemeinsam durch das Bremspedal 10 betätigbare Proportionalventile 62, 63, die die gemeinsame Druckversorgung 61 mit den beiden Bremskreisen 12, 12' verbinden. Zusätzlich weisen beide Bremskreise 12, 12' sowie die Druckversorgung 61 Drucksensoren auf. Die gleiche mit der Druckversorgung 61 verbundene Druckquelle versorgt auch die Steuerventile 70, 71, wobei hier zusätzlich zwei Druckspeicher 95, 96 vorhanden sind.

**Bezugszeichenliste:**

| | |
|---|---|
| 10 | Bremspedal |
| 12 | Bremskreis |
| 12' | Bremskreis |
| 20 | Steuereinheit |
| 30 | Geschwindigkeitssensor |
| 31 | Wiegeeinrichtung |
| 32 | Lenkwinkelsensor |
| 33 | Untergrunderfassungssensor |
| 50 | Retarder |
| 60 | Bremsventil |
| 61 | Druckversorgung |
| 62 | Proportionalventil |
| 63 | Proportionalventil |
| 70 | Steuerventil |
| 71 | Steuerventil |
| 80 | Wechselventil |
| 81 | Wechselventil |
| 90 | Steuerventil |
| 91 | Steuerventil |
| 95 | Druckspeicher |
| 96 | Druckspeicher |
| 100 | Achse |
| 101 | Achse |
| 102 | Achse |
| 110a-b | Bremse |
| 111a-b | Bremse |
| 112a-b | Bremse |
| 150 | Kennlinie Bremsventil |
| 160 | Kennlinie Steuerventil |
| 170 | Kennlinie Steuerventil |

**Patentansprüche**

1. Bremsvorrichtung für eine Arbeitsmaschine, umfassend eine Druckversorgung (61), einen Bremskreis (12, 12'), mindestens eine über den Bremskreis (12, 12') betätigbare Bremse (110a-b, 111a-b, 112a-b), ein manuell steuerbares Bremsventil (60), mittels welchem der Bremskreis (12, 12') betätigbar ist, eine Steuereinheit (20) und mindestens ein durch die Steuereinheit (20) steuerbares Steuerventil (70, 71, 90, 91), mittels welchem der Bremskreis (12, 12') betätigbar ist,
**dadurch gekennzeichnet,**
**dass** in Abhängigkeit von wenigstens zwei durch die Steuereinheit (20) erfassbaren Eingangssignalen das durch die mindestens eine Bremse (110a-b, 111a-b, 112a-b) ausgeübte Gesamtbremsmoment mittels einer entsprechenden Steuerung bzw. Regelung des mindestens einen Steuerventils (70, 71, 90, 91) einstellbar ist, wobei ein erstes Eingangssignal einen aktuellen Zustand der manuellen Betätigung des Bremsventils (60) betrifft und ein zweites Eingangssignal einen aktuellen Fahrzustand der Arbeitsmaschine betrifft.

2. Bremsvorrichtung nach Anspruch 1, wobei ein Betätigungsmittel (10), vorzugsweise ein Bremspedal (10), vorgesehen ist, welches mit dem Bremsventil (60) verbunden ist, wobei mittels einer manuellen Betätigung des Betätigungsmittels (10) das Bremsventil (60) steuerbar ist, und wobei das erste Eingangssignal eine aktuelle Stellung des Betätigungsmittels (10), insbesondere den aktuellen Winkel des Bremspedals (10), betrifft, welche vorzugsweise mittels eines Sensors erfassbar ist.

3. Bremsvorrichtung nach einem der vorhergehenden Ansprüche, wobei der aktuelle Fahrzustand der Arbeitsmaschine das Gewicht, die Beladung, die Geschwindigkeit, den Lenkwinkel, den Knickwinkel und/oder einen Schaltzustand von Sperrdifferenzialen der Arbeitsmaschine und/oder die Untergrundbeschaffenheit und/oder die Steigung des Untergrunds betrifft, und vorzugsweise mittels eines Sensors (30, 31, 32, 33) erfassbar ist.

4. Bremsvorrichtung nach einem der vorhergehenden Ansprüche, wobei durch die Einstellung des Gesamtbremsmoments die Bremsverzögerung der Arbeitsmaschine auf einen von dem aktuellen Fahrzustand unabhängigen Wert festlegbar ist, welcher vorzugsweise von dem ersten Eingangssignal abhängt.

5. Bremsvorrichtung nach den Ansprüchen 2 und 4, wobei zur Einstellung der Bremsverzögerung die Kennlinie des Gesamtbremsmoments zur Stellung des Betätigungsmittels (10) durch die Steuereinheit (20) veränderbar ist, insbesondere durch Überlagerung einer Kennlinie des Bremsventils (60) mit einer durch die Steuereinheit (20) einstellbaren Kennlinie des mindestens einen Steuerventils (70, 71, 90, 91).

6. Bremsvorrichtung nach einem der vorhergehenden Ansprüche, wobei die Bremsvorrichtung mindestens zwei Bremskreise (12, 12') mit jeweils mindestens einer Bremse (110a-b, 111a-b, 112a-b) umfasst, wobei jeder Bremskreis (12, 12') mindestens ein von der Steuereinheit (20) steuerbares Steuerventil (70, 71, 90, 91) umfasst und wobei die Steuerventile (70, 71, 90, 91) der unterschiedlichen Bremskreise (12, 12') vorzugsweise unabhängig voneinander steuerbar bzw. regelbar sind und wobei das Bremsventil (60) vorzugsweise als Zwei-Kreis-Bremsventil (60) ausgeführt ist.

7. Bremsvorrichtung nach einem der vorhergehenden Ansprüche, wobei die Bremsvorrichtung einen von der Steuereinheit (20) steuerbaren bzw. regelbaren Retarder (50) und/oder eine von der Steuereinheit (20) steuerbare bzw. regelbare Motorbremse umfasst, welche zum Gesamtbremsmoment beiträgt und vorzugsweise abhängig von dem aktuellen Zustand der manuellen Betätigung des Bremsventils (60) und/oder dem aktuellen Fahrzustand durch die Steuereinheit (20) steuerbar bzw. regelbar ist.

8. Bremsvorrichtung nach einem der vorhergehenden Ansprüche, wobei das Bremsventil (60) und mindestens ein Steuerventil (70, 71) parallel geschaltet und über mindestens ein Wechselventil (80, 81) mit dem Bremskreis (12, 12') verbunden sind.

9. Bremsvorrichtung nach einem der vorhergehenden Ansprüche, wobei mindestens ein Steuerventil (90, 91) dem Bremsventil (60) seriell nachgeschaltet ist.

10. Arbeitsmaschine mit einer Bremsvorrichtung nach einem der vorhergehenden Ansprüche.

Fig. 1

Fig. 2

Fig. 3

Fig. 4

Fig. 5

**Europäisches Patentamt**
**European Patent Office**
**Office européen des brevets**

# EUROPÄISCHER RECHERCHENBERICHT

**Nummer der Anmeldung**

EP 20 15 0546

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2009/138169 A1 (UEMATSU KOJI [JP]) 28. Mai 2009 (2009-05-28) | 1-4,6-9 | INV. B60T13/66 |
| Y | * Absätze [0022] - [0043], [0063] - [0098]; Abbildungen 1,2,3 * | 5 | |
| Y | DE 195 01 286 A1 (BOSCH GMBH ROBERT [DE]) 25. Juli 1996 (1996-07-25) * Spalte 2, Zeile 15 - Spalte 5, Zeile 60; Abbildungen 1-4 * | 5 | |
| A | DE 196 42 344 A1 (VOITH TURBO KG [DE]) 3. April 1997 (1997-04-03) * Seiten 5,6; Abbildung 1 * | 1-10 | |
| A | WO 2018/172256 A1 (WABCO GMBH [DE]) 27. September 2018 (2018-09-27) * Seiten 23-31; Abbildung 1 * | 1-10 | |

**RECHERCHIERTE SACHGEBIETE (IPC)**

B60T

Der vorliegende Recherchenbericht wurde für alle Patentansprüche erstellt

| Recherchenort | Abschlußdatum der Recherche | Prüfer |
|---|---|---|
| München | 26. Februar 2020 | Raffaelli, Leonardo |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 15 0546

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-02-2020

| Im Recherchenbericht angeführtes Patentdokument | Datum der Veröffentlichung | Mitglied(er) der Patentfamilie | Datum der Veröffentlichung |
|---|---|---|---|
| US 2009138169 A1 | 28-05-2009 | CN 101253084 A<br>JP 4806413 B2<br>JP WO2007026496 A1<br>US 2009138169 A1<br>WO 2007026496 A1 | 27-08-2008<br>02-11-2011<br>05-03-2009<br>28-05-2009<br>08-03-2007 |
| DE 19501286 A1 | 25-07-1996 | DE 19501286 A1<br>FR 2729353 A1<br>JP H08230631 A<br>US 5938295 A | 25-07-1996<br>19-07-1996<br>10-09-1996<br>17-08-1999 |
| DE 19642344 A1 | 03-04-1997 | AU 2507097 A<br>BR 9604726 A<br>DE 19642344 A1<br>WO 9816414 A1 | 11-05-1998<br>03-11-1998<br>03-04-1997<br>23-04-1998 |
| WO 2018172256 A1 | 27-09-2018 | CN 110446637 A<br>DE 102017002716 A1<br>EP 3600992 A1<br>US 2020023820 A1<br>WO 2018172256 A1 | 12-11-2019<br>27-09-2018<br>05-02-2020<br>23-01-2020<br>27-09-2018 |

EPO FORM P0461

Für nähere Einzelheiten zu diesem Anhang : siehe Amtsblatt des Europäischen Patentamts, Nr.12/82